# EUROPEAN PATENT APPLICATION

(11) **EP 2 061 190 A1**
(43) Date of publication of application: **20.05.2009**
(21) Application number: 07800945.3
(22) Date of filing: 14.08.2007
(51) Int. Cl.: H04L 12/56

(54) **METHOD, APPARATUS AND SYSTEM FOR COMPLEX FLOW CLASSIFICATION OF FRAGMENTED DATAGRAMS**

(30) Priority: 01.09.2006 CN 200610112323
(71) Applicant: Huawei Technologies Co., Ltd., Longgang District Shenzhen 518129 (CN)
(72) Inventor: SONG, Liangyu, Shenzhen, Guangdong 518129 (CN)
(74) Representative: Gulde Hengelhaupt Ziebig & Schneider
(86) International application number: PCT/CN2007/070469
(87) International publication number: WO 2008/031346

(57) **Abstract**

The disclosure discloses a method and system for complex flow classification of fragmented packets. To solve the problem of incapable of processing the non-initial fragments with the same actions as the initial fragment, the disclosure provides a method for complex flow classification of fragmented packets. The method includes determining whether a received fragment is an initial fragment, if the received fragment is an initial fragment, storing the initial fragment information and processing it, otherwise, looking for the matched initial fragment information, and performing the same action processing as the initial fragment. The disclosure also provides a system for complex flow classification of fragmented packets. The system includes a determining module, an initial fragment processing module and a non-initial fragment processing module. The application of the techniques provided in embodiments of the disclosure effectively solve the problem of complex flow classification of the fragmented packets based on the transport layer, thereby processing the initial fragment and its non-initial fragments with the same actions.

## Description

### FIELD OF THE INVENTION

The disclosure relates to the technical field of Quality of Service (QoS) of communication transmission, and more particularly, to a method, apparatus and system for complex flow classification of fragmented packets.

### BACKGROUND

With rapid development of computer networks, users have exploited new services on the Internet, such as remote teaching, remote medical, video telephone, television conference, video on demand, etc., besides the traditional WWW, E-Mail, File Transfer Protocol (FTP) applications. Enterprise users also hope to connect their branches distributed at different locations via a Virtual Private Network (VPN), so as to deploy some transactional applications. These new services are in common in that they have special requirements for the transmission performances, such as bandwidth, delay and delay jitter, etc.

The continual appearances of new services present higher requirements for service capabilities of IP network. Users are no longer satisfied with simply delivering the packets to the destination, they expect better services during the delivering, such as supporting to provide private bandwidths for users, reduce the loss rate of packets, manage and avoid network congestion, control the traffic over the network, and set priorities of the packets, i.e., provide different services according to different data flows. All of these require that the network should have better service capabilities.

Quality of Service (QoS) is a ubiquitous concept wherever the service supply and demand relationship exists. It evaluates the ability of the service provider to satisfy the service requirements of customers. Presently, the models for QoS generally have two types, the integrated service (Inter-Serv) model and differentiated service (Diff-Serv) model. The Diff-Serv model mainly employs simple flow classification (Behavior traffic classification) and complex flow classification with an Access Control List (ACL), wherein the complex flow classification provides differentiated services for different traffics by configuring the parameters such as a 5-tuplet (Differentiated Services Code Point, DSCP, code point value, type of protocol, IP address, transport layer port number, and type of the fragmented packets) in the packet header, so as to implement a traffic policy that is based on complex flow classification. Typically, the complex flow classification may be implemented by processing the packets based on the preset ACL policy.

In end-to-end packet transmissions over a network, such as a packet transmission from one end N1 of the network to another end N2 of the network, the packets are often transmitted in fragmented, i.e., an IP packet is disassembled into several IP packets to be transferred over the network sequentially. In fragmented packet transmission, the first IP packet of the fragmented packet is referred to as an initial fragment and the remaining is referred to as a non-initial fragment(s). Initial fragment has a format same as that of a normal IP packet, which is defined in RFC790 as in Table 1.

**Table 1**

| | | | | |
|---|---|---|---|---|
| Version | IHL | ToS | Total Length | |
| Indentification | | | Flags | Fragment Offset |
| TTL | | Protocol_number | Header Checksum | |
| Source IP | | | | |
| Destination IP | | | | |
| Transport layer packet header | | | | |
| Payload | | | | |

Non-initial fragments have a format that is slightly different from the initial fragment, since there is no transport layer packet header in the non-initial fragments, as shown in Table 2.

**Table 2**

| | | | | |
|---|---|---|---|---|
| Version | IHL | ToS | Total Length | |
| Indentification | | | Flags | Fragment Offset |
| TTL | | Protocol_number | Header Checksum | |
| Source IP | | | | |
| Destination IP | | | | |
| Payload | | | | |

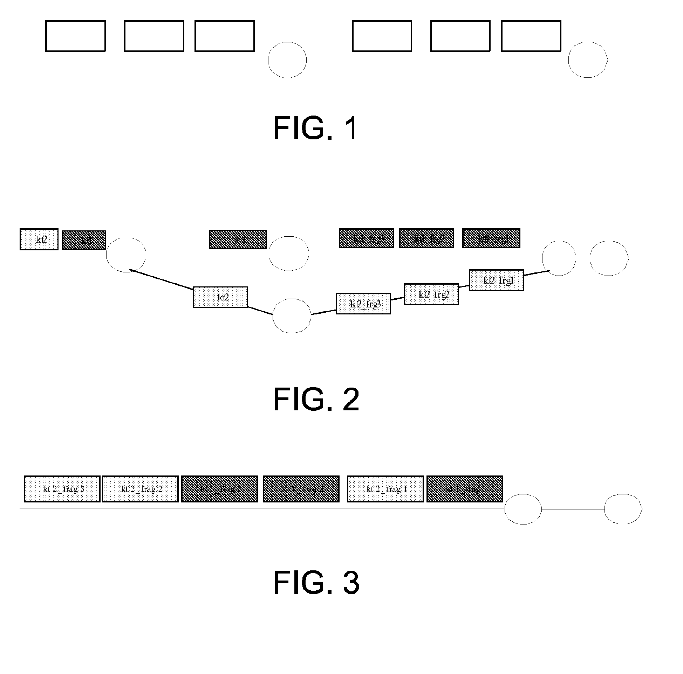

FIG. 1 is a schematic diagram of transferring fragmented packets over a network in the prior art. As shown in FIG. 1, the input port of a router N1 receives a fragmented packet which has been disassembled into three fragments, with frag1 indicating an initial fragment, and with frag2 and frag3 each indicating a non-initial fragment. Assuming an ACL policy based on the transport layer port is configured at the input port of the router N1 for complex flow classification of fragmented packets, frag1 hits the policy since frag1 has a transport layer port number, and may be processed, e.g., remark, Committed Access Rate (CAR), mirror, etc., according to this policy. Frag1 has been modified (the priority has been modified or frag1 has been dropped according to the car configuration) before it is forwarded from the router N1. For frag2 and frag3, they do not have a transport layer port number due to the absent of a transport layer packet header in their packets, thus the two non-initial fragments cannot hit the policy and are normally IP forwarded without being processed according to this policy. For example, if a remark based on the port is configured, then it is possible to modify the Type of Service (ToS) field of only the initial fragment rather than the ToS fields of the non-initial fragments. So, for the same flow, the initial fragment is processed differently from the non-initial fragments during the whole forwarding process. Therefore, when all the fragments arrive at the destination, they cannot be parsed correctly, causing difficulty to the processing in the transport layer.

### SUMMARY

Accordingly, embodiments of the disclosure provide a method, apparatus and system for complex flow classification of fragmented packets, thereby processing an initial fragment and the non-initial fragments according to a same policy, so as to facilitate the processing in the transport layer. The specific schemes are as follow.

A method for complex flow classification of fragmented packets includes:
determining whether a received fragment is an initial fragment;
if the received fragment is an initial fragment, determining an access control list (ACL) policy matched with the initial fragment based on transport layer information carried in the received initial fragment; storing, in correspondence with the ACL policy, initial fragment information extracted from the initial fragment; and processing the received fragment with the ACL policy;
if the received fragment is a non-initial fragment, comparing the information of the received non-initial fragment with the stored initial fragment information; retrieving initial fragment information corresponding to the received fragment; and processing the received fragment with the ACL policy corresponding to the initial fragment information.

An apparatus for complex flow classification of fragmented packets includes:
a determining module, configured to determine whether a received fragment is an initial fragment;
an initial fragment processing module, configured to, if the received fragment is an initial fragment, determine an access control list (ACL) policy matched with the initial fragment according to transport layer information carried in the received initial fragment, store initial fragment information extracted from the initial fragment in correspondence with the ACL policy, and process the received fragment with the ACL policy;
a non-initial fragment processing module, configured to, if the received fragment is a non-initial fragment, compare information of the received non-initial fragment with the stored initial fragment information, retrieve initial fragment information corresponding to the received fragment, and process the received fragment with the ACL policy corresponding to this initial fragment information.

A system for complex flow classification of fragmented packets includes a packet fragmenting device and a device for complex flow classification of fragmented packets, where:
the packet fragmenting device is configured to disassemble a packet into fragments and send the fragments to the device for complex flow classification of fragmented packets;
the device for complex flow classification of fragmented packets is configured to determine whether a received fragment is an initial fragment; and, if the received fragment is an initial fragment, determine an access control list (ACL) policy matched with this initial fragment according to transport layer information carried in the received initial fragment, store initial fragment information extracted from this initial fragment in correspondence with the ACL policy, and process the received fragment with the ACL policy; otherwise, compare information of the received fragment with the stored initial fragment information, retrieve initial fragment information corresponding to the received fragment, and process the received fragment with the ACL policy corresponding to this initial fragment information.

As can be seen from the above technical schemes that, in embodiments of the disclosure, the ACL policy matched with the initial fragment is determined first, then the initial fragment information in correspondence with the ACL policy is stored, and thereby the corresponding ACL policy of the initial fragment is correlated with the initial fragment; and after receiving a non-initial fragment, the stored initial fragment information is compared with the non-initial fragment information, the initial fragment information corresponding to the non-initial fragment is retrieved, i.e., it is determined which one in the initial fragments recorded previously belongs to the same packet as the non-initial fragment; finally the non-initial fragment is processed with the ACL policy corresponding to the initial fragment. Hence, the non-initial fragments may be processed according to the ACL policy matched with the corresponding initial fragment, thereby effectively solving the problem of inconsistent processing for the initial fragment and its non-initial fragments in complex flow classification of fragmented packets in the networks.

Further, to distinguish the fragments of different packets in a same data flow, the sequence ID of the packet may further be stored on the basis of storing the initial fragment information. So, for fragments of different packets with the same initial fragment information but hitting different policies due to the different transport layer information, the fragment information can be recorded more accurately, thereby ensuring the accurate processing of the non-initial fragments. Meanwhile, for fragments of different packets with the same initial fragment information and hitting the same policy, the sequence ID of the corresponding initial fragment is stored in correspondence with the same initial fragment information, thereby saving the memory. In addition, the memory space can also be saved by setting a time stamp for each packet.

### BRIEF DESCRIPTION OF THE DRAWINGS

FIG. 1 is a schematic diagram of transferring fragmented packets over the network in the prior art;

FIG. 2 is a schematic diagram of transferring different packets of a same data flow;

FIG. 3 is a schematic diagram of a sequence in which the different fragmented packets shown in FIG. 2 arrive at the apparatus;

FIG. 4 is a flowchart of a method for complex flow classification of fragmented packets according to a first embodiment of the disclosure;

FIG. 5 is a flowchart for periodic detection of fragmented packets according to a second embodiment of the disclosure;

FIG. 6 is a schematic diagram of a system for complex flow classification of fragmented packets according to a third embodiment of the disclosure; and

FIG. 7 is a schematic diagram of an apparatus for complex flow classification of fragmented packets according to the third embodiment of the disclosure.

### DETAILED DESCRIPTION

Embodiments of the disclosure are further described below in conjunction with, but not limited to, the accompanying drawings and the exemplary embodiments.

In an embodiment of the invention, packet information is extracted from initial fragments of the fragmented packets, a non-initial fragment is compared with the information extracted from the initial fragments, and a corresponding policy operation is performed according to the comparison result, so that the initial fragment and its non-initial fragments are processed with the same policy action.

While applying the technical schemes according to an embodiment of the disclosure, an ACL policy based on the transport layer information (e.g., a TCP/UPD port number) is configured for each data flow requiring policy processing. This ACL policy corresponds to a policy entry, including one or more actions that will be performed when this policy is applied. This policy entry is recorded in a policy action table (policy_action_table), and with the TCP/UPD port as a mask.

For a normal packet, if the port number in the packet matches the port number of the policy, the policy action table is looked up and the packet is processed with normal actions. For a fragmented packet, an initial fragment and the non-initial fragments are processed differently. Specifically, in case of an initial fragment, the initial fragment information is stored and the initial fragment is processed according to the corresponding ACL policy. The stored initial fragment information may include information that distinguishes different data flows, such as the source IP address, the destination IP address, and the transport layer port number of the initial fragment. In case of a non-initial fragment, an initial fragment belonging to the same data flow as this non-initial fragment may be found according to the stored information, and the non-initial fragment may be processed according to the ACL policy corresponding to this initial fragment.

In addition, for some networking environments, a data flow may pass through different paths. For example, in the network as shown in FIG. 2, the apparatus N1 is configured with packet-by-packet sharing. Thus, two packets of a same data flow go through different paths. The two packets of the same data flow are denoted as pkt1 and pkt2, wherein pkt1 includes an initial fragment pkt1_frag1 and non-initial fragments pkt1_frag2 and pkt1_frag3, while pkt2 includes an initial fragment pkt2_frag1 and non-initial fragments pkt2_frag2 and pkt2_frag3. The pkt1 and pkt2 are fragmented on N2 and N3, respectively. Thus, when they arrive at N4 and proceed from N4 to N5, the arriving sequence of these fragments may be as shown in FIG. 3. Since the initial fragments of the two packets arrive first, and the two packets have identical information such as the source IP address (SIP) and the destination IP address (DIP) except the sequence ID (SequenceID) information, the SequenceID information must be considered in order to distinguish the non-initial fragments corresponding to different initial fragments. Therefore, embodiments of the disclosure preferably store the sequence ID information while storing the initial fragment information.

The specific modes for carrying out embodiments of the disclosure are further described in detail below with the exemplary embodiments.

### Embodiment 1

Taking the processing of the fragments of the two packets shown in FIG. 3 as an example, this embodiment illustrates a specific mode for implementing embodiments of the disclosure.

In this embodiment, whenever an initial fragment of the fragmented packets is received, a policy key value is constructed with the corresponding transport layer information (e.g., the TCP/UDP port number) extracted from this fragment, and this value is used as an index to look up the policy action table for a policy entry that matches this policy key value. If a matched policy entry is found, this policy is hit. At this time, the source IP address (SIP), the destination IP address (DIP), the transport layer protocol number and a fragment flag bit frag_flag of the initial fragment are written into a fragment information key table as a fragment information key value, the address of the matched policy entry is written into a fragment information table (frag_infor_table) corresponding to this fragment information key value as an action table index (action_index), and the sequence ID (sequence_id) is written into a sequence ID key table in correspondence to the fragment information table. Then the policy action table (policy_action_table) is looked up for a matched policy entry according to the action table index (action_index), and the fragments are processed according to the actions (filter, remark, CAR, etc.) which are recorded in the policy entry and are configured by the policy action table.

The reasons for extracting the above information are as follows.

Since a non-initial fragment only has an IP header and cannot match the transport layer related parameters configured by the policy, it should not look up the policy action table (policy_action_table) for the non-initial fragment by using a constructed policy key value as for a normal packet. For a non-initial fragment, it needs to determine whether the non-initial fragment header matches the information (the source IP address (SIP), the destination IP address (DIP), the protocol number and the fragment flag bit frag_flag described above) extracted from the initial fragment, so as to determine whether they belong to the same data flow. If they belong to the same data flow, the initial fragment corresponding to the non-initial fragment will be found according to the sequence ID in the sequence ID key table. Thus, it is possible to look up the action table using the action table index in the corresponding fragment information entry, and take the corresponding action.

In this embodiment, the information of the initial fragments is stored in terms of a table, and the fragment information is stored in the fragment information key table. However, the specific applications of embodiments of the disclosure are not limited to the form of a table, and the relationships between the initial fragment information and the non-initial fragment information may be designed as needed.

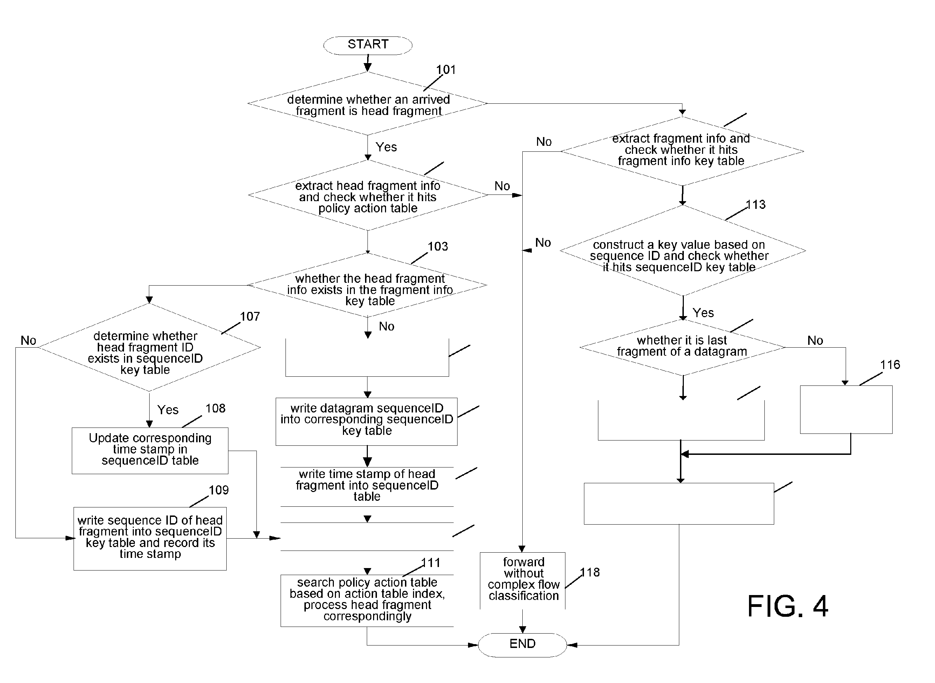

FIG. 4 is a detailed flowchart of a method for complex flow classification of fragmented packets according to Embodiment 1 of the disclosure. As shown in FIG. 4, this method includes the following steps.

Step 101: On arrival of a fragment at the router, it is determined whether the fragment is an initial fragment. If the fragment is an initial fragment, the process proceeds to step 102; otherwise, the process proceeds to step 112.

Whether the fragment is an initial fragment is determined by detecting whether the fragment has a transport layer packet header (with a transport layer port number). The fragment is an initial fragment if it has a transport layer packet header; otherwise, it is a non-initial fragment.

Step 102: Packet information (a source IP address (SIP), a destination IP address (DIP), a transport layer protocol number and a fragment flag bit frag_flag) is extracted from the initial fragment, and it is determined whether the packet information hits the policy action table. If the packet information hits the policy action table, the process proceeds to step 103; otherwise, the process proceeds to step 118.

The data structure of the policy key table is as shown in Table 3.

**Table 3**

| | | | | | | | |
|---|---|---|---|---|---|---|---|
| Rule_id | flag | tos | sip | dip | protocol | Tcp/Udp | transport |
| | | | | | | port number | layer flag |
| | masked | masked | masked | masked | | | |

Since the policy only configures an ACL policy table based on the transport layer, it is necessary to extract packet information from the initial fragment and look up the policy table merely according to the Rule_id, the transport layer port number and other information of the transport layer in the fragment, while the other portions are masked.

Step 103: The fragment information key table is searched for the initial fragment information that is the same as the received initial fragment. If the initial fragment information that is the same as the received initial fragment is not found, the process proceeds to step 104; otherwise, the process proceeds to step 106.

Step 104: The information of the initial fragment is written into the fragment information key table in the format of Table 4.

The data structure of the fragment information key table is as shown in Table 4.

**Table 4**

| | | | | | | | |
|---|---|---|---|---|---|---|---|
| Rule_id | Valid_flag | sip | dip | protocol | Frag_flag | ttl | tos |

The meanings for the specific fields are given as follow:
Valid_flag: represents a valid flag bit of the key table. If this flag bit is 0, it indicates that the entry is invalid; if this flag bit is 1, it indicates that the entry is valid.
Rule_id: represents ACL configuration rule ID.

The other fields are extracted from the packet header, in a similar way as extracted from the IP packet header. The extracted information is stored in the fragment information key table as a fragment information key value.

Step 105: The sequence ID in the initial fragment header is written into the sequence ID key table in correspondence with the fragment information key value determined in step 103.

The data structure of the sequence ID key table is as shown in Table 6.

**Table 6**

| | | |
|---|---|---|
| Rule_id | Valid_flag | Sequence_id |

wherein: Rule_id: represents the ACL configuration rule ID;
if the value of Valid_flag is 1, it indicates that the entry is valid; and if this flag bit is 0, it indicates that the entry is invalid;
Sequence_id is the unique flag to determine whether a non-initial fragment belongs to the same packet as the initial fragment.

In this embodiment, to distinguish the situations where packets of the same data flow go through different paths as shown in FIG. 2, it preferably stores the sequence ID information in this step to distinguish different packets of the same data flow. However, in a networking environment where the same data flow does not go through different paths, this step may be omitted.

Step 106: A time stamp of the initial fragment is written into the sequence ID table corresponding to the sequence ID key table, and the process proceed to step 110.

The data structure of the sequence ID table is as shown in Table 7:

**Table 7**

| |
|---|
| Pkt_timestamp |

wherein Pkt_timestamp represents the time stamp written after the first packet match action, and is used for periodic detection.

Generally, the time period of storing the initial fragment for a packet is limited to some extent. The time stamp written in this step may be used to control a packet. If the initial fragment information has been stored for a time period longer than a given time without receiving the final fragment of the packet, then the stored initial fragment information may be dropped.

Step 107: It is further determined whether the sequence ID key table corresponding to the found initial fragment information contains the initial fragment ID received in step 101. If such a sequence ID key table is found, the process proceeds to step 108; otherwise, the process proceeds to step 109.

Since the initial fragment information same as the received initial fragment is found in step 103, which means that some entry in the fragment information key table is found, then the searching of the sequence ID key table corresponding to this entry in step 107 for the received initial fragment ID continues in this step. The initial fragment ID is the sequence ID information of the packet. If the initial fragment ID is found, then this ID has been used before and its corresponding time stamp needs to be updated; otherwise, a sequence ID corresponding to the initial fragment is created in the sequence ID key table corresponding to the fragment information key value, and the corresponding time stamp is stored.

Step 108: The time stamp, corresponding to the sequence ID key that is found, is updated; and the process proceeds to step 110.

Step 109: The sequence ID of the initial fragment is written into the sequence ID key table corresponding to the fragment information key value that is found, the time stamp is recorded, and the process proceeds to step 110.

Step 110: The action table index corresponding to the policy that is hit in step 102 is written into the fragment information table corresponding to the fragment information key value stored in step 103.

In this step, the action table index corresponding to the policy that is hit is the address of the policy entry.

The data structure of the fragment information table is as shown in Table 5:

**Table 5**

| |
|---|
| Action_index |

The field Action_index in this table is an action table index to find a specified policy entry in the policy action table, and a corresponding action (filter, remark, CAR...) may be performed according to the content of this entry.

Step 111: The policy action table is searched according to the action table index, and the initial fragment is processed correspondingly.

Step 112: Packet information is extracted from the IP header of a non-initial fragment, and it is determined whether it hits the fragment information key table. If it hits, it indicates that the non-initial fragment belongs to the same data flow packet as the fragment in the table that is hit, and a fragment information entry corresponding to the fragment information key entry will be returned, and then the process proceeds to step 113. Otherwise, it indicates that the non-initial fragment does not have a same data flow in the fragment information key table, i.e., there is no matched ACL policy, and then the process proceeds to step 118.

Step 113: A sequence ID key value is constructed according to the sequence ID in the non-initial fragment, and it is checked whether it hits the entry in the sequence ID key table. If it hits the entry, the process proceeds to step 114; otherwise, the process proceeds to step 118.

In this step, hitting the entry means that the same sequence ID key value is found in the sequence ID key table.

Step 114: It is determined whether the non-initial fragment is the final fragment of the packet, and if it is the final fragment of the packet, the process proceeds to step 115; otherwise, the process proceeds to step 116.

Step 115: The valid flag bit in the corresponding sequence ID key table is cleared, which indicates that the sequence ID entry has been released, and then the process proceeds to step 117.

Step 116: The corresponding time stamp in the sequence ID table is updated, and then the process proceeds to step 117.

Step 117: The policy action table is searched according to the action table index, the initial fragment is processed correspondingly, and then the processing terminates.

Step 118: Performing forwarding process normally without complex flow classification policy processing.

The relationships among the entries of the policy table, the fragment information table and the sequence ID key table are as follow:

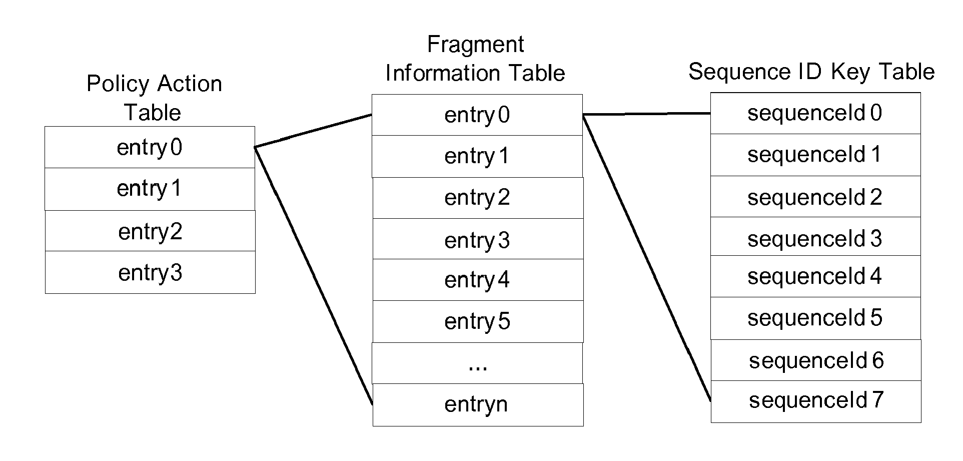

In consideration that the fragments of the same flow should arrive after an interval of 8 packets, an experiential value is chosen while designing, and thus each flow may retain 8 fragments at a moment. Of course, it may be designated according to the practice about how many fragments may be retained in a flow.

The entries of the fragment information key table are corresponding to the entries of the fragment information table one by one, as well as the entries of the sequence ID key table with the entries of the sequence ID table. In implementation, a key value is constructed to search the corresponding key table; and if the corresponding key table is found by using the constructed key value, an entry of the information table or sequence table corresponding to the entry of the key table will be returned.

### Embodiment 2

A middle or final fragment of a fragmented packet may be lost in a congested network. In the case that a middle fragment is lost, this is unperceivable for a router if the packet is fragmented, but would be perceived when the packet in a higher layer is reproduced after the fragments arriving at the terminal, and will be processed in accordance with some mechanism (such as a retransmission mechanism) in this layer. In the case that the final fragment is lost, the fragment information table (frag_info_table) and the sequence ID table (sequenceID_table) cannot obtain the final fragment, the resources are occupied and impossible to be released. Hence, the space cannot be allocated to other flows. Accordingly, embodiments of the disclosure define a time stamp for each entry in the sequence ID table. If this sequence ID is not released after a certain time period, this fragment is considered as having been dropped, thus the corresponding sequence ID will be aged, as well as the corresponding entry in the fragment information table.

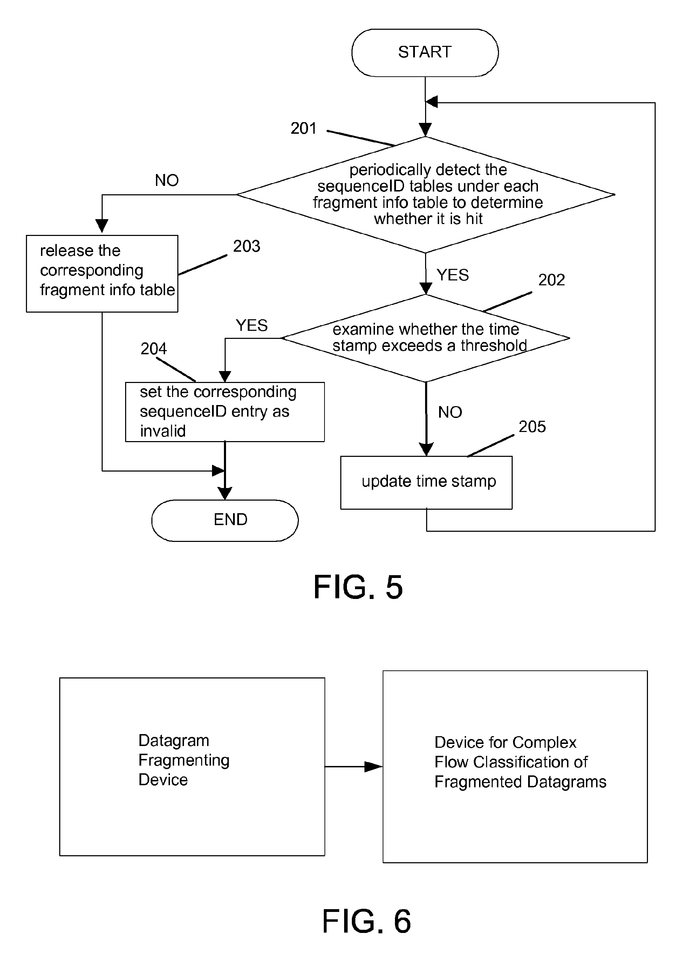

Referring to FIG. 5, the detection and updating process for the fragment information table in a congested network is as follow.

Step 201: The valid fragment information key tables (if the valid flag is set to 1, it indicates that this entry is valid) is detected periodically and in a polling way. For the valid fragment information key tables, the sequence ID tables under each fragment information table is detected (by setting the valid flag bit in the sequence ID key value structure to 1 to determine whether it matches the sequence ID key) to determine whether an entry is hit. An entry is valid if it is hit, and then the process proceeds to step 202. If none entry is hit, then all sequence ID entries under the fragment information table are invalid, and then the process proceeds to step 203.

Step 202: It is examined whether the time stamp in the entry exceeds a threshold, and the process proceeds to step 204 if it exceeds the threshold; otherwise the process proceeds to step 205.

Step 203: The corresponding fragment information table is released.

Step 204: The Valid_flag in the corresponding sequence ID key table is set to 0, indicating that this sequence ID entry is invalid.

Step 205: The time stamp is updated (during the transmission of each packet, there is a hardware clock timer to update the time stamp based on the display of the clock timer). If the entries in all sequence ID key tables under a fragment information table are invalid, this information table is released by clearing the valid flag bit in the fragment information key table.

The above method according to an embodiment of the disclosure is significant for extending applications of QoS in networks.

### Embodiment 3

Embodiments of the disclosure also provide an apparatus and system for complex flow classification of fragmented packets, which will be described in this embodiment.

FIG. 6 is a specific block diagram of a system for complex flow classification of fragmented packets in this embodiment, which may be employed to implement the methods illustrated in FIG. 4 and FIG. 5. As shown in FIG. 6, this system includes a packet fragmenting device and a device for complex flow classification of fragmented packets.

In this system, the packet fragmenting device is configured to disassemble the packets and send the fragments to the device for complex flow classification of fragmented packets.

The device for complex flow classification of fragmented packets is configured to determine whether a received fragment is an initial fragment, and if it is an initial fragment, determine an access control list (ACL) policy matched with this initial fragment based on the transport layer information carried in the received initial fragment, store the initial fragment information extracted from this initial fragment in correspondence with the ACL policy, and process the received fragment with this ACL policy; otherwise, compare the information of the received fragment with the stored initial fragment information to find the initial fragment information corresponding to the received fragment, and process the received fragment with the ACL policy corresponding to this initial fragment information.

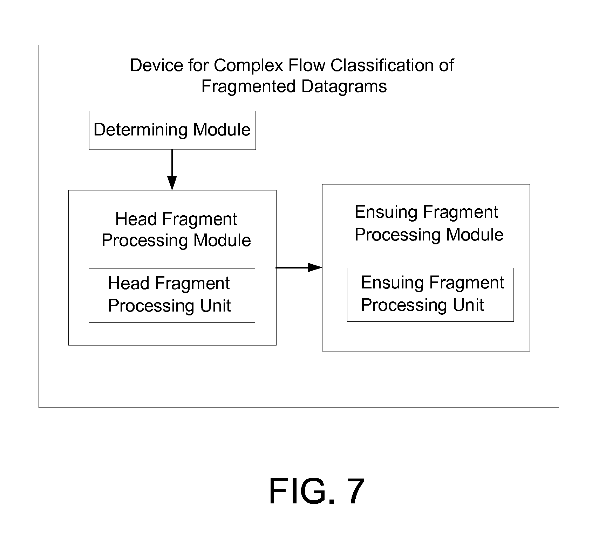

FIG. 7 is a specific block diagram of an apparatus for complex flow classification of fragmented packets in this embodiment, which may be applied in the system illustrated in FIG. 6. As shown in FIG. 7, the apparatus for complex flow classification of fragmented packets in this embodiment includes the following modules:
a determining module, configured to determine whether a received fragment is an initial fragment;
an initial fragment processing module, configured to, if the received fragment is an initial fragment, determine an access control list (ACL) policy matched with the initial fragment according to the transport layer information carried in the received initial fragment, store the initial fragment information extracted from the initial fragment in correspondence with the ACL policy, and process the received fragment with the ACL policy; and
a non-initial fragment processing module, configured to, if the received fragment is a non-initial fragment, compare the information of the received fragment with the stored initial fragment information, retrieve the initial fragment information corresponding to the received fragment, and process the received fragment with the ACL policy corresponding to the initial fragment information.

The initial fragment processing module includes:
an initial fragment processing unit, configured to: extract packet information from the initial fragment and detect whether it hits a preset policy action table, if it hits, store the packet information and the sequence ID of the initial fragment, and process the fragment according to the policy entry that is hit; otherwise, forward the fragment directly without complex flow classification.

The non-initial fragment processing module includes:
a non-initial fragment processing unit, configured to: extract packet information and sequence ID from the non-initial fragment to determine whether they hit the fragment information and sequence ID of initial fragments that are stored, and process the non-initial fragment as an initial fragment that is hit; otherwise, forward the fragment directly without complex flow classification.

To reserve the memory, the non-initial fragment processing unit further includes:
a non-initial fragment processing sub-unit, configured to determine whether the non-initial fragment is the final fragment of the fragmented packet, and delete the stored sequence ID if it is the final fragment; otherwise, retain the sequence ID.

The initial fragment processing unit further includes:
a time stamp setting unit, configured to set a time stamp for each sequence ID.

Accordingly, the non-initial fragment processing unit further includes:
a periodic detection sub-unit, configured to periodically detect whether the time stamp exceeds a threshold, and set the corresponding sequence ID of the time stamp as invalid if it exceeds the threshold; otherwise update the time stamp and continue detecting, and delete all the sequence IDs of a packet when all sequence IDs of the packet are invalid.

The embodiments described above are merely some of the preferred embodiments of the disclosure, the variations and alternatives made within the scope of the technical schemes of the disclosure by those skilled in the art should be encompassed within the scope of the disclosure.

## Claims

1. A method for complex flow classification of fragmented packets, **characterized in that:**
determining whether a received fragment is an initial fragment; and
if the received fragment is an initial fragment,
determining an access control list (ACL) policy matched with the initial fragment
based on transport layer information carried in the received initial fragment;
storing, in correspondence with the ACL policy, initial fragment information
extracted from the initial fragment, and
processing the received fragment with the ACL policy; or,
if the received fragment is a non-initial fragment,
comparing the information of the received fragment with the stored initial fragment information,
retrieving initial fragment information corresponding to the received fragment, and
processing the received fragment with the ACL policy corresponding to the initial fragment information.

2. The method of claim 1, **characterized in that,** the determining the ACL policy matched with the initial fragment based on the transport layer information carried in the received initial fragment comprises:
extracting the transport layer information of the initial fragment and searching a preset policy action table with the transport layer information as an index for a matched ACL policy; and
if the matched ACL policy is found, determining that this ACL policy is the ACL policy matched with the initial fragment; or
if the matched ACL policy is not found, determining that no ACL policy matches the initial fragment, and forwarding the fragment directly without complex flow classification.

3. The method of claim 1, **characterized in that,** the storing, in correspondence with the ACL policy, the initial fragment information extracted from the initial fragment comprises:
extracting IP header information of the initial fragment as the initial fragment information, and storing a storage address of the determined ACL policy into a fragment information table in correspondence with the IP header information.

4. The method of claim 3, **characterized in that,** the comparing the information of the received fragment with the stored initial fragment information, and retrieving the initial fragment information corresponding to the received fragment comprise:
extracting IP header information of the initial fragment, and selecting initial fragment information in the stored initial fragment information that is same as the IP header information of the fragment as the initial fragment information corresponding to the fragment.

5. The method of claim 3, **characterized in that,** after extracting the IP header information of the initial fragment as the initial fragment information and before storing the storage address of the determined ACL policy into the fragment information table in correspondence with the IP header information, the method further comprises:
searching the fragment information table for the initial fragment information same as the received initial fragment;
if such initial fragment information is found,
storing the storage address of the determined ACL policy into the fragment information table in correspondence with the IP header and fragment information;
storing, in correspondence with the initial fragment information, a sequence ID extracted from the initial fragment; or, if such initial fragment information is not found,
directly storing the sequence ID extracted from the initial fragment in correspondence with the initial fragment information that is found without storing the storage address of the determined ACL policy into the fragment information table in correspondence with the IP header and fragment information.

6. The method of claim 5, **characterized in that,** the comparing the information of the received fragment with the stored initial fragment information, and retrieving the initial fragment information corresponding to the received fragment comprise:
extracting the IP header information of the received fragment;
searching the initial fragment information in the stored initial fragment information that is same as the IP header information of the fragment;
extracting the sequence ID of the fragment; and
comparing the sequence ID with the initial fragment information that is found, if a sequence ID same as the fragment exists, then determining that the initial fragment information that is found is the initial fragment information corresponding to the received fragment; otherwise, determining that no initial fragment information corresponding to the received fragment is found.

7. The method of claim 4 or 6, **characterized in that,** after comparing the information of the received fragment with the stored initial fragment information, the method further comprises:
forwarding the fragment directly without complex flow classification if the stored initial fragment information has no initial fragment information that is same as the IP header information of the fragment.

8. The method of claim 5 or 6, **characterized in that,** if the received fragment is not an initial fragment, after processing the received fragment with the ACL policy corresponding to the initial fragment, the method further comprises:
determining whether the received fragment is a final fragment;
if the received fragment is a final fragment, deleting the stored sequence ID corresponding to this initial fragment; or
if the received fragment is a final fragment, retaining the sequence ID.

9. The method of claim 5 or 6, **characterized in that,** after storing the sequence ID extracted from the initial fragment, the method further comprises:
setting a time stamp for the stored sequence ID;
detecting periodically whether the time stamp for each sequence ID exceeds a threshold, setting the sequence ID corresponding to the time stamp as invalid if the time stamp exceeds the threshold, or updating the time stamp and continuing detecting if the time stamp does not exceed the threshold; and
deleting initial fragment information from the fragment information table if all sequence IDs corresponding to the initial fragment information are invalid.

10. An apparatus for complex flow classification of fragmented packets, **characterized in that:**
a determining module, configured to determine whether a received fragment is an initial fragment;
an initial fragment processing module, configured to, if the received fragment is an initial fragment, determine an access control list (ACL) policy matched with the initial fragment according to transport layer information carried in the received initial fragment, store initial fragment information extracted from the initial fragment in correspondence with the ACL policy, and process the received fragment with the ACL policy; and
a non-initial fragment processing module, configured to, if the received fragment is a non-initial fragment, compare information of the received fragment with the stored initial fragment information, retrieve initial fragment information corresponding to the received fragment, and process the received fragment with the ACL policy corresponding to this initial fragment information.

11. The apparatus of claim 10, **characterized in that,** the initial fragment processing module comprises:
an initial fragment processing unit, configured to extract transport layer information from the initial fragment and detect whether it hits a preset policy action table, if the transport layer information hits the policy action table, store the fragment information and the sequence ID of the initial fragment and process the fragment according to an policy entry that is hit; otherwise, forward the fragment directly without complex flow classification.

12. The apparatus of claim 11, **characterized in that,** the non-initial fragment processing module comprises:
a non-initial fragment processing unit, configured to extract fragment information and a sequence ID from the non-initial fragment to determine whether they hit the stored fragment information and sequence ID of the initial fragment, and if the fragment information and the sequence ID hit the stored fragment information and sequence ID, process the fragment same as the initial fragment that is hit; otherwise, forward the fragment directly without complex flow classification.

13. The apparatus of claim 12, **characterized in that,** the non-initial fragment processing unit further comprises:
a non-initial fragment processing sub-unit, configured to determine whether the non-initial fragment is a final fragment of a fragmented packet, if the non-initial fragment is the final fragment, delete the stored sequence ID; otherwise, retain the sequence ID.

14. The apparatus of claim 11, **characterized in that,**
the initial fragment processing unit further comprises: a time stamp setting sub-unit, configured to set a time stamp for each sequence ID; and
the non-initial fragment processing unit further comprises: a periodic detection sub-unit, configured to: detect periodically whether the time stamp exceeds a threshold, and if the time stamp exceeds the threshold, set a sequence ID corresponding to the time stamp as invalid; otherwise update the time stamp and continue detecting; wherein the periodic detection sub-unit is further configured to delete all sequence IDs of a packet if all sequence IDs of the packet are invalid.

15. A system for complex flow classification of fragmented packets, **characterized in** comprising a packet fragmenting device and a device for complex flow classification of fragmented packets,
the packet fragmenting device is configured to disassemble a packet into fragments and send the fragments to the device for complex flow classification of fragmented packets;
the device for complex flow classification of fragmented packets is configured to determine whether a received fragment is an initial fragment, and if the received fragment is an initial fragment, determine an access control list (ACL) policy matched with this initial fragment according to transport layer information carried in the received initial fragment, store initial fragment information extracted from this initial fragment in correspondence with the ACL policy, and process the received fragment with the ACL policy; otherwise, compare information of the received fragment with the stored initial fragment information, retrieve initial fragment information corresponding to the received fragment, and process the received fragment with the ACL policy corresponding to this initial fragment information.
